# EUROPÄISCHE PATENTANMELDUNG

(11) **EP 1 256 490 A2**
(43) Veröffentlichungstag der Anmeldung: **13.11.2002**
(21) Anmeldenummer: 02010037.6
(22) Anmeldetag: 08.05.2002
(51) Int. Cl.: B60R 19/34

(54) **Baugruppe aus Stossfängern und Crashboxen**

(30) Priorität: 11.05.2001 DE 10122999
(71) Anmelder: Benteler Automobiltechnik GmbH & Co. KG, 33104 Paderborn (DE)
(72) Erfinder: Härtel, Wulf, 33184 Altenbeken (DE); Kordisch, Thomas, Dr., 33739 Bielefeld (DE)
(74) Vertreter: Ksoll, Peter, Dr.-Ing.

(57) **Zusammenfassung**

Bei einem Stoßfänger für ein Kraftfahrzeug werden zwischen den Längsträgern des Kraftfahrzeugrahmens und dem Querträger (2) sogenannte Crashboxen (3 als Pralldämpfer eingegliedert. Erfindungsgemäß sind diese mit einer inneren Ausschäumung (6 versehen. Die Ausschäumung (6) kann aus einem organischen oder anorganischem Schaummaterial bestehen. Die Quersteifigkeit der Crashboxen (3) wird durch die Ausschäumung (6) erhöht und das Energieabsorptionsvermögen verbessert.

## Beschreibung

Die Erfindung betrifft einen Stoßfänger für ein Kraftfahrzeug mit einem quer zu den Längsträgern des Kraftfahrzeugrahmens festlegbaren Querträger, wobei zwischen dem Querträger und den Längsträgern sogenannte Crashboxen als Pralldämpfer eingegliedert sind.

Stoßfänger werden quer an Front und Heck eines Kraftfahrzeugs zwischen der die Karosserie abschließenden Kunststoffverschalung und dem Rahmen des Kraftfahrzeugs angeordnet. Sie sollen leichte Stöße und Kollisionen ohne oder nur mit geringen Fahrzeugbeschädigungen abfangen.

Unterschiedlichste Stoßfänger bzw. Stoßfängeranordnungen sind bekannt, bei denen zwischen den Querträger und die Längsträger Crashboxen als Pralldämpfer geschaltet sind. Diese sollen die aus einem Anprall resultierende kinetische Energie absorbieren, indem diese in Verformungsarbeit umgewandelt wird. Fachsprachlich wird dies als Energieabsorption bezeichnet. Die Crashboxen bestehen in der Regel aus hohlzylindrischen Aluminium-, Stahl- oder Edelstahlblechkonstruktionen oder Rohrhalbzeugen.

Durch die US-A-5,732,801 zählt ein zylinderförmig gestalteter Pralldämpfer zum Stand der Technik. Aus der DE 197 00 022 A1 geht ein Stoßfänger hervor, dessen Pralldämpfer zwei hintereinander geschaltete Deformationsglieder umfasst, von denen das eine elastisch verformbar und das andere bleibend verformbar ist. Der Aufbau ist jedoch insgesamt kompliziert.

Eine in der Praxis bewährte Crashbox besteht aus einer im Querschnitt rechteckigen Konstruktion, bestehend aus Ober- und Unterschale. Diese sind U-förmig gebogen und miteinander gefügt worden. Anschließend wird die Crashbox mit einer längsträgerseitigen Flanschplatte versehen. Diese Bauart zeichnet sich durch eine hohe Quersteifigkeit aus.

Es sind ferner Crashboxen bekannt, die aus einem tiefgezogenen Napf runder Konfiguration bestehen. Die Crashbox weist einen ersten Längenabschnitt auf, der über einen Absatz in einen zweiten im Querschnitt kleineren Längenabschnitt übergeht. Ein Vorteil dieser Bauart sind die geringen Herstellungskosten, jedoch ist die Quersteifigkeit mitunter nicht ausreichend, um ein Ausknicken bei einem nicht senkrechten Aufprall zu verhindern.

Der Erfindung liegt ausgehend vom Stand der Technik die Aufgabe zugrunde, einen Stoßfänger zu schaffen mit Crashboxen, die ein höheres Energieabsorptionsvermögen aufweisen.

Die Lösung dieser Aufgabe besteht nach der Erfindung in einem Stoßfänger gemäß Anspruch 1.

Erfindungsindividualisierend sind die Crashboxen der Stoßfänger zumindest partiell, also bereichsweise, innen ausgeschäumt. Eine Crashbox des Stoßfängers besteht aus einem äußeren, insbesondere metallischen Hohlprofil, das eine innere Ausschäumung aus einem Schaumsystem aufweist. Hierdurch wird das Energieabsorptionsvermögen einer Crashbox und damit des Stoßfängers erhöht und das Kraft-Weg-Verhalten der Crashbox bei einem Aufprall verbessert.

Vorteilhafte Ausgestaltungen und Weiterbildungen des grundsätzlichen Erfindungsgedankens bilden Gegenstand der abhängigen Ansprüche 2 bis 4.

Erfindungsgemäß kommen für die Crashboxen Hohlprofile aus Stahl, Edelstahl oder Leichtmetall, insbesondere Aluminium oder Magnesium, zum Einsatz, selbstverständlich auch als Pressschalenlösungen. Der innere Hohlraum der Crashboxen ist durch eine Ausschäumung aus einem aushärtenden Schaum verstärkt. Durch die Ausschäumung wird die Quersteifigkeit der Crashboxen erhöht, wodurch neue konstruktive Lösungen der Crashboxen an sich möglich werden. Als Folge der inneren Aussteifung kann die Wanddicke des äußeren Hohlprofiles reduziert werden. Die Wanddickenreduktion führt zu einer Gewichtsreduzierung. Da die Ausschäumung zu einem hohen Anteil aus Hohlräumen (Blasen, Poren) besteht, kann in der Summe das Gesamtgewicht der Crashboxen und damit des Stoßfängers reduziert oder bei nur geringer Gewichtserhöhung das Energieabsorptionsvermögen deutlich erhöht werden.

Grundsätzlich kann die Ausschäumung nur partiell vorgesehen sein, Vorzugsweise ist eine Crashbox vollständig bzw. nahezu vollständig ausgeschäumt. Der Vorgang zum Ausschäumen der Crashbox kann in der Crashbox selbst geschehen oder es können auch bereits aus dem entsprechenden Schaum vorgefertigte Einsätze verwendet werden. Denkbar ist auch die Hintereinanderschaltung von Schaumblockeinsätzen, wobei die einzelnen Schaumblöcke eine unterschiedliche Dichte aufweisen. Um die Crasheigenschaften zu verbessern, kann die Dichte des Schaums über die Füllhohe der Crashbox variiert werden. In der Praxis kann die Dichte der Ausschäumung vom Querträger ausgehend in Richtung zu den Längsträgern hin variieren, beispielsweise zunehmen. Der Widerstand der Crashbox steigt dann mit zunehmender Stärke eines Anpralls.

Zum Einsatz gelangen können organische Schaumsysteme, wie Ein- oder Mehrkomponentenschäume (z.B. Polyurethan, Polypropylen, expandierendes Polystyrol, Polyethylen). Polyurethanschäume sind Zweikomponentensysteme mit einer Polyol-Komponente und einer Isocyanat-Komponente. Expandierende Schäume können in Form von Einoder Zweikomponenensystemen Anwendung finden. Hierbei handelt es sich um Spritzschäume, die flüssig in einem Mischkopf mit einer Mischpatrone zusammengeführt und entweder manuell oder robotergesteuert in das Hohlprofil der Crashbox eingebracht werden.

Sehr erfolgsversprechend im Sinne einer Steigerung des Energieabsoptionsvermögens sind auch anorganische Schaummaterialien. Hierbei wird in erster Linie an Glasschaum, Aluminiumschaum, Magnesiumschaum, Stahlschaum oder mineralischen Schaum gedacht.

Für die Praxis bietet sich der Einsatz von Aluminiumschaum an. Die Verwendung von Aluminiumschaum bietet sich insbesondere bei Crashboxen an, deren Hohlprofile aus Aluminium bzw. einer Aluminiumlegierung besteht.

Je nach Typ der Crashbox und deren Einbausituation, insbesondere aber entsprechend dem jeweiligen Fahrzeugtyp kann die Schaumdichte entsprechend des erforderlichen Energieaufnahmevermögens eingestellt werden.

Die Ausschäumung erhöht die Quer-/Knicksteifigkeit einer Crashbox. Die Ausschäumung führt zu einer gegenseitigen Abstützung der inneren Wand des äußeren Hohlprofiles und der Ausschäumung. Das Verformungsvermögen der Ausschäumung trägt wesentlich zur Erhöhung des Energieaufnahmevermögens bei. Der homogene einstellbare Kraft-Weg-Verlauf verbessert die Crasheigenschaften des Stoßfängers aus Crashbox und Querträger.

Die Erfindung ist nachfolgend anhand eines in den Zeichnungen dargestellten Ausführungsbeispiels beschrieben. Es zeigen:
- Figur 1: die perspektivische Darstellung eines Stoßfängers in einer Rückansicht und
- Figur 2: eine technisch schematisierte Darstellung einer erfindungsgemäßen Crashbox.

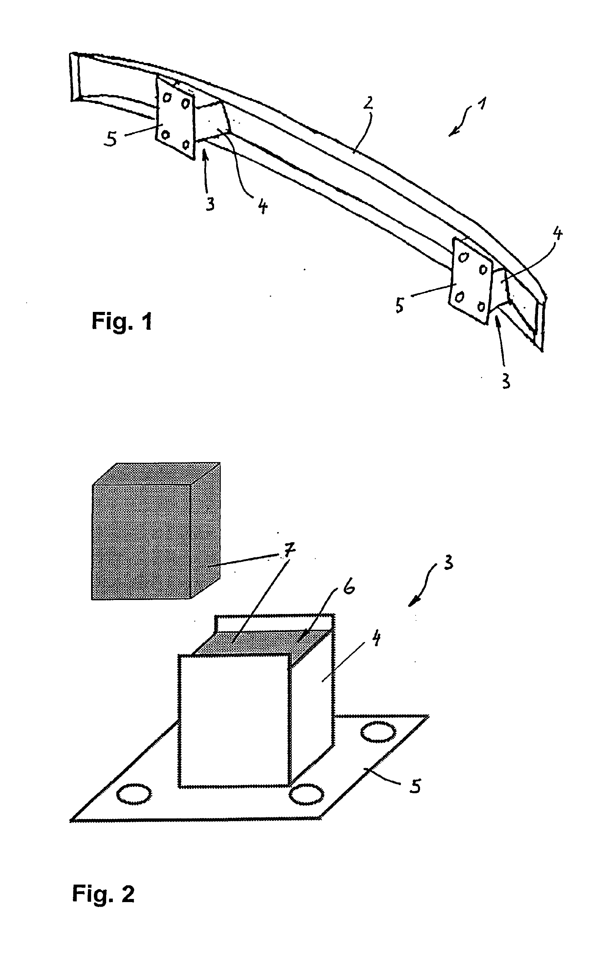

Figur 1 zeigt einen Stoßfänger 1 mit einem quer zu den hier nicht darstellten Längsträgern eines Kraftfahrzeugs festlegbaren schalenförmigen Querträger 2. Der Querträger 2 stützt sich über Crashboxen 3 an den Längsträgern ab. Die Crashboxen 3 sollen zusätzlich zum Querträger 2 die aus einem Anprall resultierende Energie absorbieren, indem diese in Verformungsarbeit umgewandelt wird. Die Crashboxen 3 bestehen aus einem metallischen Hohlprofil 4, beispielsweise aus Stahl, Edelstahl, Aluminiumblech oder Magnesiumblech. In dem in Figur 2 dargestellten Ausführungsbeispiel ist das Hohlprofil 4 eine Blechkonstruktion. Über eine hintere Flanschplatte 5 erfolgt die Verbindung zu den Längsträgern. Das querträgerseitige Ende der Crashboxen 3 ist in an die Innenkontur des Querträgers 2 angepasster Weise ausgebildet und hier mit dem Querträger 2 gefügt, meist verschweißt.

Das Hohlprofil 4 der Crashboxen 3 ist durch eine inneren Ausschäumung 6 ausgefüllt. Wie anhand der Figur 2 zu erkennen, ist hierzu ein vorgefertigter Schaumblock 7 in das Hohlprofil 4 eingesetzt. Selbstverständlich kann das Hohlprofil 4 auch direkt mit einem expandierenden Schaumsystem verfüllt werden. Zum Einsatz gelangen können organische oder anorganische Schaummaterialien.

Die Ausschäumung 7 erhöht das Energieabsorptionsvermögen der Crashbox 3, in dem der Kraft-Weg-Verlauf im Falle eines Anpralls verbessert wird.

Ferner wird die Quersteifigkeit der Crashboxen 4 und des Stoßfängers 1 erhöht. Der Stoßfänger 1 insgesamt zeichnet sich durch sein positives Steifigkeitsverhalten und sein hohes Energieabsorptionsvermögen aus.

### Bezugszeichenaufstellung

- 1: - Stoßfänger
- 2: - Querträger
- 3: - Crashboxen
- 4: - Hohlprofil
- 5: - Flanschplatte
- 6: - Ausschäumung
- 7: - Schaumblock

## Patentansprüche

1. Stoßfänger für ein Kraftfahrzeug mit einem unter Eingliederung von Crashboxen (3) quer zu den Längsträgern des Kraftfahrzeugrahmens festlegbaren Querträger (2), **dadurch gekennzeichnet, dass** die Crashboxen (3) zumindest partiell eine innere Ausschäumung (6) aufweisen.

2. Stoßfänger nach Anspruch 1, **dadurch gekennzeichnet, dass** die Ausschäumung (6) aus einem organischen Schaummaterial besteht.

3. Stoßfänger nach Anspruch 1, **dadurch gekennzeichnet, dass** die Ausschäumung (6) aus einem anorganischen Schaummaterial besteht.

4. Stoßfänger nach einem der Ansprüche 1 bis 3, **dadurchgekennzeichnet,** dass die Dichte der Ausschäumung vom Querträger ausgehend in Richtung zu den Längsträgern hin variiert.
